# DEMANDE DE BREVET EUROPEEN

(11) **EP 2 833 054 A2**
(43) Date de publication de la demande: **04.02.2015**
(21) Numéro de dépôt: 14178559.2
(22) Date de dépôt: 25.07.2014
(51) Int. Cl.: F21S 8/10

(54) **Système d'éclairage à moyens de balayage perfectionnés**

(30) Priorité: 30.07.2013 FR 1357506
(71) Demandeur: VALEO VISION, 93012 Bobigny Cedex (FR)
(72) Inventeur: Albou, Pierre, 75013 Paris (FR); Godbillon, Vincent, 75011 Paris (FR); Puente, Jean-Claude, 93190 Livry Gargan (FR)

(57) **Abrégé**

La présente invention concerne un système d'éclairage et/ou de signalisation pour véhicule automobile, qui comporte :
- au moins une source lumineuse primaire (14) émettant un rayonnement lumineux (L), et
- des moyens de balayage (16) recevant le rayonnement lumineux (L) de la source lumineuse primaire (14) et le répartissant spatialement sur une surface de balayage (17).

Les moyens de balayage (16) comprennent au moins un miroir de balayage (24) de forme générale annulaire s'étendant autour d'un axe formant axe de rotation (X) du miroir (24). Le miroir de balayage (24) présente un profil évoluant circonférentiellement, de façon que le mouvement relatif du miroir (24) en rotation par rapport au rayonnement lumineux (L) émis par la source lumineuse (14) produit le balayage, par le rayonnement lumineux réfléchi par le miroir (24), de la surface de balayage (17).

Le miroir de balayage (24) est ménagé sur la tranche d'un disque (18) ou la surface d'un cylindre rotatif autour de l'axe (X) de rotation du miroir de balayage (24).

## Description

La présente invention concerne le domaine technique des systèmes d'éclairage et/ou de signalisation pour véhicules automobiles.

On connaît du document WO 2012/144143 un dispositif d'éclairage pour véhicule automobile, comportant :
une source lumineuse constituée de 2 ou 3 LEDs de couleurs différentes, et
un dispositif de balayage constitué d'un réflecteur rotatif 26 comportant des ailes en portions d'anneaux circulaires inclinés

On connaît également dans l'état de la technique, notamment d'après le document EP 2 063 170, un système d'éclairage pour véhicule automobile comportant :
au moins une source lumineuse primaire émettant un rayonnement lumineux, et
des moyens de balayage recevant le rayonnement lumineux de la source lumineuse primaire et le répartissant spatialement sur un dispositif de conversion de longueur d'onde, de façon à balayer sur ce dispositif de conversion une surface de balayage.

La source lumineuse primaire est une source laser qui peut comprendre, par exemple, une diode laser.

Le dispositif de conversion de longueur d'onde comprend un substrat en matériau transparent sur lequel est déposée une couche mince de matériau phosphorescent.

On notera que l'homme du métier entend par « matériau phosphorescent » un matériau ayant un comportement phosphorescent et constitué par différents éléments chimiques ne contenant pas nécessairement de phosphore.

Les moyens de balayage comprennent un micro-miroir mobile autour de deux axes.

Le rayonnement lumineux renvoyé par les moyens de balayage traverse le dispositif de conversion de longueur d'onde lequel réémet un rayonnement de lumière blanche.

Le système d'éclairage décrit dans EP 2 063 170 comporte en outre un système optique d'imagerie recevant la lumière blanche réémise par le dispositif de conversion de longueur d'onde et projetant cette lumière blanche en avant du véhicule pour former un faisceau d'éclairage. Dans un tel système d'éclairage, le dispositif de conversion de longueur d'onde est situé au voisinage d'un plan focal du système optique d'imagerie.

Les moyens de balayage à micro-miroir mobile sont relativement efficaces mais ils relèvent d'une technologie complexe à mettre en oeuvre du fait notamment qu'elle requiert des moyens complexes d'entraînement et de pilotage du mouvement du micro-miroir. En effet, il faut piloter le mouvement du micro-miroir autour de deux axes différents ou bien remplacer le micro-miroir unique par deux micro-miroirs mobiles autour de deux axes respectifs.

L'invention a pour but de proposer un système d'éclairage du type décrit ci-dessus comportant des moyens de balayage plus simples à mettre en oeuvre que les moyens de balayage à micro-miroir.

A cet effet, l'invention a pour objet un système d'éclairage et/ou de signalisation pour véhicule automobile comportant :
- au moins une source lumineuse primaire émettant un rayonnement lumineux, et
- des moyens de balayage recevant le rayonnement lumineux de la source lumineuse primaire et le répartissant spatialement,
caractérisé en ce que les moyens de balayage comprennent au moins un miroir de balayage de forme générale au moins partiellement annulaire s'étendant autour d'un axe formant axe de rotation du miroir, le miroir de balayage présentant un profil évoluant circonférentiellement, de façon que le mouvement relatif du miroir en rotation par rapport au rayonnement lumineux émis par la source lumineuse produit un balayage par le rayonnement lumineux réfléchi par le miroir,
et en ce que le miroir de balayage est ménagé sur la tranche d'un disque ou la surface d'un cylindre rotatif autour de l'axe de rotation du miroir de balayage.

Ainsi, les moyens de balayage à miroir de balayage rotatif sont plus simples à mettre en oeuvre que les moyens de balayage à micro-miroir. En effet, alors que les moyens de balayage à micro-miroir nécessitent de piloter ce micro-miroir autour de deux axes, généralement orthogonaux, ou bien de piloter deux micro-miroirs mobiles autour de deux axes correspondants, les moyens de balayage à miroir de balayage rotatif requièrent de piloter uniquement le mouvement de rotation du miroir de balayage autour d'un axe unique, ceci en permettant d'assurer un balayage à deux dimensions d'une surface.

Un système d'éclairage selon l'invention peut en outre comporter l'une ou plusieurs des caractéristiques optionnelles suivantes :
- le miroir de balayage est formé par une surface réglée de génératrices coplanaires à l'axe de rotation du miroir ;
- le profil du miroir de balayage évolue circonférentiellement de façon à présenter des motifs successifs permettant de former des lignes successives de **balayage** de longueurs évolutives ;
- le profil du miroir de balayage évolue circonférentiellement de façon à présenter au moins un motif permettant de former une ligne de balayage de la surface de balayage de concentration évolutive ;
- le miroir de balayage comprend une zone, dite zone accessoire, ne participant pas au balayage mais recevant partiellement le rayonnement lumineux émis par la source lumineuse primaire ou par une source lumineuse dédiée de faible puissance, la zone accessoire comportant des motifs, notamment un motif particulier servant de référence, formant une graduation pour la mesure d'un paramètre du miroir lié au temps, par exemple la position angulaire du miroir ou la vitesse de rotation de ce miroir;
- le système comprend plus d'une source lumineuse primaire émettant chacune un rayonnement lumineux et autant de miroirs de balayage, les miroirs de balayage comprenant un axe de rotation commun, chaque source lumineuse primaire émettant un rayonnement lumineux vers un miroir de balayage associé ;
- le système comprend
   - une seule source lumineuse primaire émettant un rayonnement lumineux,
   - plus d'un miroir de balayage, et
   - des moyens de positionnement sélectif du rayonnement lumineux émis par la source lumineuse primaire de façon à émettre ce rayonnement lumineux provenant de la source lumineuse vers un miroir de balayage sélectionné ;
- le système comprend plus d'une source lumineuse primaire émettant chacune un rayonnement lumineux vers un miroir de balayage commun à l'ensemble des sources lumineuses primaires ;
- le système comprend des moyens de masquage de chaque miroir de balayage activables automatiquement lorsque le miroir de balayage est à l'arrêt ;
- le système comprend des moyens d'arrêt de chaque source lumineuse primaire activables automatiquement, lorsque le miroir de balayage associé à la source lumineuse primaire est à l'arrêt, par des moyens dont l'état évolue en fonction de l'état arrêté ou en mouvement de rotation de du miroir de balayage ;
- les moyens de balayage recevant le rayonnement lumineux de la source lumineuse primaire le répartissent spatialement sur une surface de balayage, le mouvement relatif du miroir en rotation par rapport au rayonnement lumineux émis par la source lumineuse produisant le balayage, par le rayonnement lumineux réfléchi par le miroir, de la surface de balayage ;
- le système comprend un dispositif de conversion de longueur d'onde portant la surface de balayage, les moyens de balayage répartissant spatialement le rayonnement lumineux qu'ils reçoivent sur le dispositif de conversion, de façon à balayer sur ce dispositif de conversion la surface de balayage ;
- le rayonnement lumineux émis par la source lumineuse primaire est accordé par rapport au dispositif de conversion de longueur d'onde de façon à réémettre un rayonnement de lumière blanche ;
- le système comprend un système optique d'imagerie recevant la lumière blanche réémise par le dispositif de conversion de longueur d'onde et projetant cette lumière blanche en avant du véhicule pour former un faisceau d'éclairage, le dispositif de conversion de longueur d'onde étant situé au voisinage d'un plan focal du système optique d'imagerie.

L'invention sera mieux comprise à la lecture de la description qui va suivre, donnée uniquement à titre d'exemple et faite en se référant aux dessins annexés dans lesquels :
- la figure 1 est une vue schématique en perspective d'un système d'éclairage selon l'invention comportant des moyens de balayage selon un premier mode de réalisation de l'invention ;
- la figure 2 est une vue à échelle agrandie, en perspective, d'un disque des moyens de balayage selon le premier mode de réalisation de la figure 1, un miroir de balayage étant ménagé sur la tranche de ce disque ;
- la figure 3 montre différentes sections radiales partielles du disque de la figure 2 délimitées par différentes génératrices de la tranche du disque de la figure 2 ;
- la figure 4 est une vue schématique de différents tronçons circonférentiels de la tranche du disque de la figure 2 ;
- la figure 5 est une vue schématique de la surface de balayage du système d'éclairage représenté sur la figure 1 ;
- les figures 6 et 7 sont des vues schématiques en perspective de moyens de balayage selon des deuxième et troisième modes de réalisation de l'invention respectivement ;
- les figures 8 et 9 sont des vues schématiques en perspective de moyens de balayage selon un quatrième mode de réalisation de l'invention montrant ces moyens de balayage respectivement à l'arrêt et en rotation ;
- la figure 10 est une vue schématique de dessus de moyens de balayage selon un cinquième mode de réalisation de l'invention.

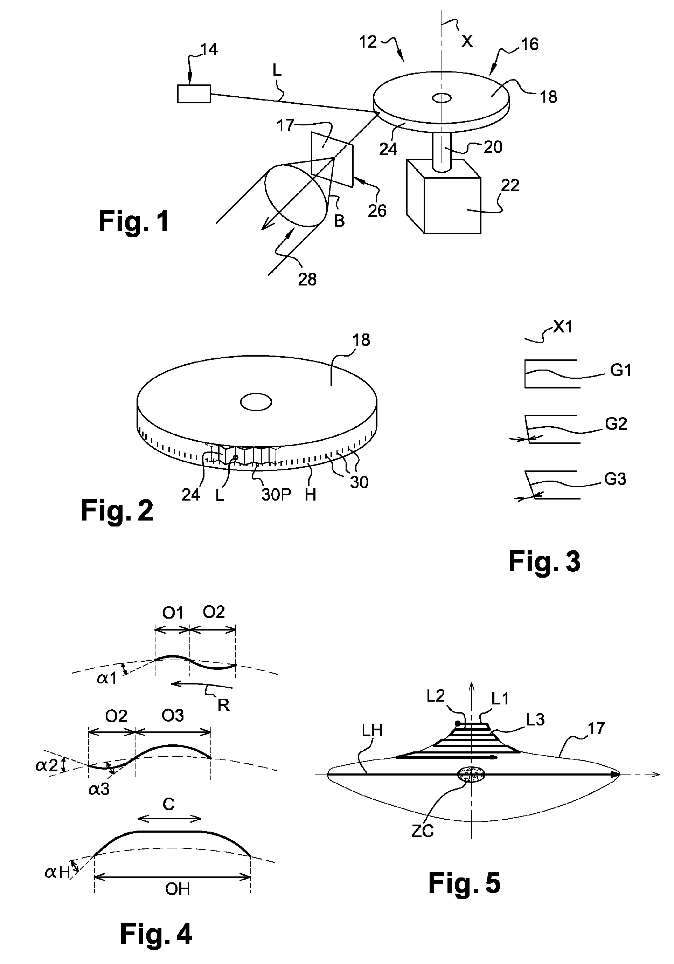

On a représenté sur la figure 1 un système d'éclairage selon l'invention désigné par la référence générale 12.

Le système d'éclairage 12 comprend une source lumineuse primaire 14 de type classique émettant un rayonnement lumineux. La source lumineuse primaire 14 comporte une source laser formée, dans l'exemple décrit, par une diode laser émettant un rayonnement lumineux, dit rayonnement laser L, dont la longueur d'onde est comprise entre **300** nanomètres et 500 nanomètres, et de préférence voisine de 450 ou 460 nanomètres. Ces longueurs d'onde correspondent à des couleurs allant du bleu au proche ultraviolet.

La source lumineuse primaire 14 peut, en variante, comprendre un dispositif optique combinant en un seul faisceau plusieurs rayonnements lasers, par exemple à l'aide de fibres optiques ou de dispositifs tirant profit des polarisations différentes **ou de longueurs d'onde différentes** de différentes sources laser.

Le système d'éclairage 12 comprend également des moyens de balayage 16 recevant le rayonnement lumineux L de la source lumineuse primaire 14 et le répartissant spatialement sur une surface de balayage 17 décrite plus bas.

Selon un premier mode de réalisation des moyens de balayage 16, ces derniers comprennent un disque 18 rotatif porté par un arbre d'entraînement 20 d'un moteur d'entraînement classique 22.

Comme cela est visible plus en détail sur la figure 2, un miroir de balayage 24 est ménagé sur la tranche du disque 18. Le miroir de balayage 24 a donc une forme générale annulaire s'étendant autour d'un axe X, formant axe de rotation du miroir 24, matérialisé par l'arbre 20 du moteur 22.

En variante, le miroir de balayage 24 pourrait être ménagé sur la surface d'un cylindre rotatif autour de l'axe de rotation X du miroir de balayage.

Le système d'éclairage 12 comprend encore un dispositif classique 26 de conversion de longueur d'onde sur lequel est formée la surface balayage 17. Les moyens de balayage 16 répartissent spatialement le rayonnement lumineux qu'ils reçoivent sur le dispositif de conversion 26, de façon à balayer sur ce dispositif de conversion la surface de balayage 17.

Le rayonnement lumineux L émis par la source lumineuse 14 est accordé par rapport au dispositif 26 de conversion de longueur d'onde de façon à réémettre un rayonnement B de lumière blanche.

A cet effet, le dispositif 26 de conversion de longueur d'onde comprend, par exemple, un substrat en matériau transparent recouvert par une couche mince de matériau phosphorescent.

Ainsi, de façon connue, chaque point de la couche de matériau phosphorescent du dispositif 26 recevant le rayonnement laser L (qui est quasiment monochromatique et cohérent) réémet, un rayonnement lumineux de longueur d'onde différente, et notamment une lumière qui peut être considérée comme « blanche », c'est-à-dire qui comporte une pluralité de longueurs d'onde entre environ 400 nanomètres et environ 800 nanomètres, c'est-à-dire comprises dans le spectre de la lumière visible. Cette émission de lumière blanche se produit selon un diagramme d'émission lambertienne, c'est-à-dire avec une luminance uniforme dans toutes les directions.

Dans l'exemple représenté sur les figures, le rayonnement lumineux renvoyé par les moyens de balayage 16 traverse le dispositif 26 de conversion de longueur d'onde lequel réémet le rayonnement de lumière blanche B.

Un système optique d'imagerie classique 28 reçoit la lumière blanche B réémise par le dispositif 26 de conversion de longueur d'onde et projette cette lumière blanche en avant du véhicule pour former un faisceau d'éclairage.

On notera que le dispositif 26 de conversion de longueur d'onde est situé au voisinage d'un plan focal du système optique d'imagerie 28.

Ainsi, la source lumineuse primaire 14 génère un rayonnement laser L qui est dévié selon deux directions sensiblement orthogonales par le système de balayage 16, et il en émerge dans un angle solide interceptant la surface de balayage 17 du dispositif 26 de conversion de longueur d'onde.

Selon une variante non représentée, le dispositif 26 de conversion de longueur d'onde comprend un substrat formant miroir qui est recouvert par la couche de matériau phosphorescent. Par ailleurs, le système de balayage 16 et le système optique d'imagerie 28 sont disposés du même côté réfléchissant du miroir formé par le substrat.

Dans cette variante, la couche de matériau phosphorescent étant déposée sur le substrat réfléchissant pour le rayonnement laser L, on est assuré que le rayonnement laser L qui n'aurait pas rencontré de grain de matériau phosphorescent avant d'avoir traversé complètement la couche de matériau phosphorescent, pourra rencontrer un grain de matériau phosphorescent après avoir été réfléchi par le substrat réfléchissant.

Comme on peut le voir sur les figures 2 à 4, le miroir de balayage 24 présente un profil évoluant circonférentiellement, de façon que le mouvement relatif du miroir 24 en rotation par rapport au rayonnement lumineux L émis par la source lumineuse 14 produit le balayage, par le rayonnement lumineux réfléchi par le miroir, de la surface de balayage 17.

En effet, comme cela sera précisé plus en détail par la suite, le profil évolutif du miroir de balayage 24 dévie le rayonnement émis par la source 14 selon deux directions sensiblement orthogonales de façon à balayer la surface balayage 17 par exemple suivant des lignes successives s'étendant en boustrophédon, comme on peut le voir sur la figure 5.

Comme on peut le voir sur la figure 3, sur laquelle on a représenté en traits mixtes un axe X1 parallèle à l'axe X, le miroir de balayage 24 est formé par une surface réglée engendrée par des génératrices coplanaires à l'axe de rotation X du miroir, par exemple par des génératrices G1 parallèles à l'axe de rotation X du miroir de balayage 24 et des génératrices G2, G3 inclinées par rapport à cet axe de rotation X. L'inclinaison des génératrices G2, G3 permet de déplacer les lignes de balayage selon une direction sensiblement perpendiculaire à ces lignes de balayage.

En se référant aux figures 4 et 5, on voit que le profil du miroir de balayage 24 évolue circonférentiellement de façon à présenter des motifs successifs, dits motifs déviateurs, permettant, lorsque que le miroir de balayage 24 tourne autour de son axe X et reçoit le rayonnement lumineux L émis par la source 14 fixe par rapport au disque 18, de former des lignes successives de balayage, de longueurs évolutives, sur la surface 17.

Ainsi, sur la figure 4, chaque motif O1, 02, 03, OH correspond respectivement à une ligne de balayage correspondante L1, L2, L3, LH sur la surface de balayage 17 représentée sur la figure 5. On notera que sur la figure 4, le sens de rotation de la roue 18 est indiqué par la flèche R.

Le motif O1 permet au rayonnement laser réfléchi par le miroir 24 de parcourir la ligne de balayage L1. La ligne de balayage L2, plus longue que la ligne L1, est formée par le motif 02 s'étendant sur un secteur angulaire plus grand que celui sur lequel s'étend le motif O1. Par ailleurs, l'angle α2 que fait le début du motif 02 avec un contour de référence du disque 18 est plus élevé que l'angle α1 correspondant du motif O1, ceci afin d'augmenter l'angle de déviation du rayonnement laser réfléchi par le miroir 24 lorsque le motif 02 est parcouru par ce rayonnement réfléchi.

De même, la ligne de balayage L3 est plus longue que la ligne L2 et le motif 03 s'étend sur un secteur angulaire plus grand que celui sur lequel s'étend le motif 02. Par ailleurs, l'angle α3 que fait le début du motif 03 avec le contour de référence du disque 18 est plus élevé que l'angle α2 correspondant du motif 02.

On notera que c'est parce que α3> α2> α1 que la ligne L3 est plus longue que L2, elle-même plus longue que L1. Le fait que le secteur angulaire du motif 03 soit plus grand que celui du motif 02, lui-même plus grand que celui du motif O1 permet une concentration de lumière constante ou croissante de L1 vers L3.

On notera que le profil du miroir de balayage peut évoluer de façon à présenter au moins un motif permettant de former une ligne de balayage de la surface de balayage 17 de concentration évolutive, comme cela est visible sur les figures 4 et 5.

Ainsi, le motif OH correspond à la ligne de balayage LH sur la surface de balayage 17. L'angle αH que fait le début du motif OH avec le contour de référence du disque 18 est grand car la déviation à générer est grande. Par ailleurs ce motif OH comporte une zone C relativement aplatie. Plus précisément, dans cette zone C, le motif est proche d'un arc de cercle centré sur l'axe de rotation X du disque 18. Cela permet de ralentir le parcours angulaire du rayonnement laser réfléchi. Il est ainsi possible de créer une zone de concentration maximale ZC du rayonnement laser réfléchi, particulièrement bien adaptée lorsque l'on souhaite former un faisceau de lumière blanche pour feu de route.

Il est à noter que l'écartement des lignes de balayage peut varier. En particulier il est possible de les resserrer dans certaines zones afin d'accroître la concentration de lumière.

Le rayonnement laser L peut, par exemple, parcourir la surface de balayage ligne par ligne, de haut en bas, comme cela est représenté sur la figure 5.

Un balayage en boustrophédon (comme cela est représenté sur la figure 5) est avantageux car il permet de former le profil du miroir de balayage 24 de façon continue de motif en motif. Un balayage avec retour discontinu à la ligne (comme un retour de chariot de machine à écrire) implique une discontinuité entre au moins deux motifs du profil évolutif du miroir de balayage 24.

Par ailleurs lorsque le rayonnement laser L atteint le bas de la surface 17 de balayage il peut, soit repartir vers le haut de la surface 17 selon un trajet en boustrophédon, évoluant de bas en haut, avantageusement défini par une continuité des motifs du miroir 24 sur le disque 18, soit repartir du haut de la surface 17 selon un trajet discontinu défini par une discontinuité entre au moins deux motifs du profil évolutif du miroir de balayage 24.

Comme on peut le voir sur la figure 2, de préférence, le miroir de balayage 24 comprend une zone H, dite zone accessoire, ne participant pas au balayage mais recevant partiellement le rayonnement lumineux L émis par la source lumineuse 14. La zone accessoire H comporte des motifs 30, par exemple des encoches, formant une graduation pour la mesure d'un paramètre du miroir 24 lié au temps, par exemple la position angulaire du miroir 24 ou la vitesse de rotation de ce miroir 24.

En variante, la zone accessoire H peut recevoir, au lieu d'une partie du rayonnement lumineux L émis par la source lumineuse 14, un rayonnement lumineux émis par une source lumineuse dédiée de faible puissance.

Un motif particulier 30P de la zone accessoire H peut servir de référence.

Grâce à la graduation de la zone accessoire H, on peut prévoir une régulation de la vitesse de rotation du disque 18 à l'aide de moyens électroniques relativement simples agissant, par exemple, en boucle fermée.

Par ailleurs, en relevant dans un signal fourni par une cellule photoélectrique recevant le rayonnement réfléchi par la zone accessoire H les impulsions provoquées par les motifs de cette zone H, en particulier le motif 30P, on peut, par comptage des impulsions et remise à zéro du décompte lors du passage du motif 30P, calculer un nombre entier représentatif du point du miroir 24 couramment éclairé. Le motif 30P étant positionné de manière connue par rapport aux motifs déviateurs du miroir 24, le calcul du nombre entier ci-dessus représente (de manière discrétisée) la direction de déviation courante du rayonnement réfléchi par les motifs déviateurs. Cette information permet de contrôler l'alimentation de la source lumineuse primaire de manière à créer, par exemple, une fonction anti-éblouissement GFHB conformément au sigle anglais pour « Glare Free High Beam ».

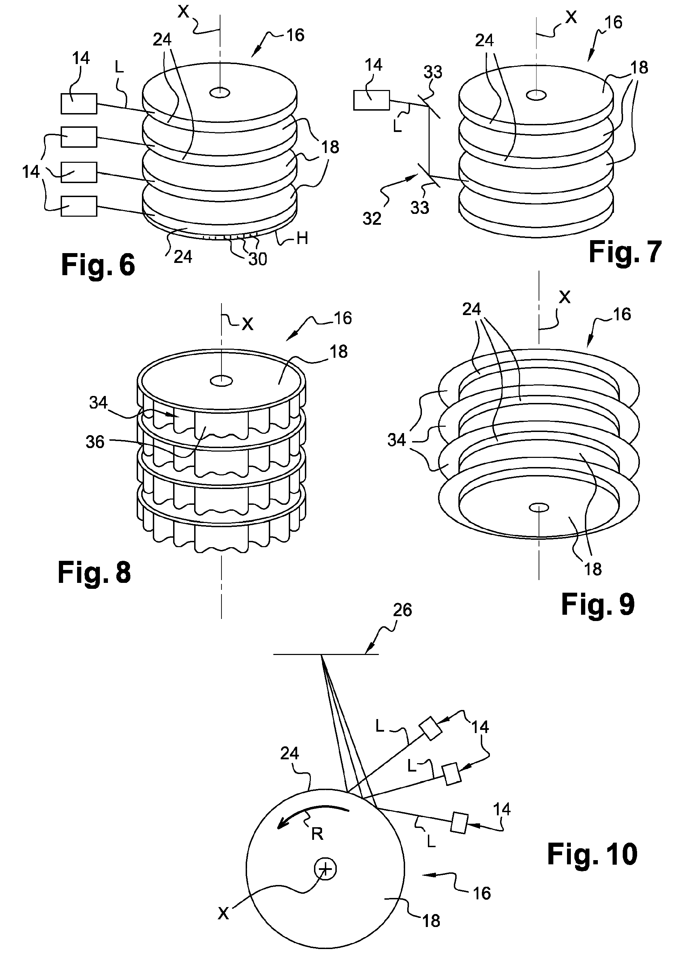

On a représenté sur les figures 6 à 10, des deuxième à cinquième modes de réalisation des moyens de balayage 16. Sur ces figures, les éléments analogues à ceux des figures précédentes sont désignés par des références identiques.

Le deuxième mode de réalisation des moyens de balayage 16, représenté sur la figure 6, est destiné à équiper un système d'éclairage 12 comportant plus d'une source lumineuse primaire 14, par exemple quatre sources lumineuses primaires 14 comme cela est représenté sur la figure 6. Chaque source lumineuse 14 émet un rayonnement lumineux L. Les moyens de balayage 16 comprennent autant de miroirs de balayage 24 que de sources lumineuses 14.

Chaque miroir de balayage 24 est ménagé sur la tranche d'un disque 18 correspondant. Les miroirs de balayage 24 ont pour axe de rotation commun l'axe X et sont entraînés par un moteur commun classique relativement rudimentaire et facile à piloter.

Chaque source lumineuse 14 émet un rayonnement lumineux L vers un miroir de balayage 24 associé.

Bien entendu, un des disques 18 peut comporter une zone accessoire H munie des motifs 30 formant graduation pour permettre une régulation de la vitesse de rotation de l'ensemble des disques 18 des moyens de balayage 24. La graduation de la zone accessoire H est donc commune à l'ensemble des miroirs de balayage 24. En variante, différentes zones accessoires H de motifs 30 peuvent être prévues sur différents disques 18 pour continuer de bénéficier d'une zone accessoire H lorsque seulement certaines des sources lumineuses 14 sont activées.

Les moyens de balayage 16 selon le deuxième mode de réalisation représenté sur les figures 6 permettent, par exemple, de répartir la réalisation de différentes caractéristiques du faisceau d'éclairage que l'on veut obtenir sur les différents miroirs de balayage 24.

Ainsi, un premier des miroirs de balayage 24 pourrait présenter un profil dédié à la réalisation de la portée (intensité) requise du faisceau d'éclairage que l'on veut obtenir et un deuxième des miroirs de balayage 24 pourrait présenter un profil dédié à la réalisation de la largeur requise du faisceau d'éclairage que l'on veut obtenir.

Les moyens de balayage 16 selon le deuxième mode de réalisation représenté sur la figure 6 permettent également de réaliser, soit différents sous-faisceaux d'éclairage correspondant à différentes parties du faisceau d'éclairage que l'on veut obtenir, soit différents faisceaux identiques destinés à se superposer pour former le faisceau d'éclairage que l'on veut obtenir.

On notera que les disques 18 peuvent présenter des diamètres différents. Par exemple en augmentant le diamètre on garantit une bonne précision de fabrication d'un miroir 24 qui présente de nombreux motifs déviateurs, notamment pour former un faisceau de grande extension verticale. Pour former un faisceau plus concentré angulairement moins de motifs déviateurs sont nécessaires. On peut donc réduire le diamètre du disque 18 sans réduire les dimensions des secteurs angulaires sur lesquels s'étendent les motifs déviateurs.

Les moyens de balayage 16 selon le deuxième mode de réalisation représenté sur la figure 6 permettent également de réaliser des balayages complémentaires (entrelacés) permettant d'obtenir un nombre de lignes élevé avec un nombre de motifs déviateurs moins grand sur chaque disque 18, ce qui permet de faciliter la réalisation des surfaces de balayage et permet d'augmenter la puissance délivrée dans une zone donnée.

Dans ce dernier cas (formation de différents faisceaux identiques destinés à se superposer), chaque source lumineuse 14 peut être formée par une diode laser de puissance relativement modérée, par exemple de 1 à 3 watts, peu coûteuse. La superposition des différents faisceaux aboutit à un faisceau d'éclairage global équivalent à un faisceau d'éclairage formé par une diode laser de puissance relativement élevée, par exemple de 10 watts. Cependant, on évite de recourir à une diode laser unique de puissance relativement élevée, coûteuse et le cas échéant plus dangereuse à utiliser qu'une diode laser de faible puissance.

Les moyens de balayage 16 selon le troisième mode de réalisation, représentés sur la figure 7, comprennent plusieurs miroirs de balayage 24, comme pour le deuxième mode de réalisation. Toutefois, dans ce cas, le système d'éclairage 12 ne comprend qu'une seule source lumineuse primaire 14 et des moyens 32 de positionnement sélectif du rayonnement lumineux L émis par la source lumineuse 14 de façon à émettre ce rayonnement L vers un miroir de balayage 24 sélectionné.

Dans l'exemple représenté sur la figure 7, les moyens 32 de positionnement sélectif comprennent deux miroirs 33 pilotés. En variante, les moyens 32 de positionnement sélectif pourraient comprendre des moyens motorisés de déplacement de la source lumineuse 14, soit en translation, soit en rotation, soit selon un mouvement combiné de translation et de rotation.

Les moyens de balayage 16 selon le quatrième mode de réalisation, représentés sur les figures 8 et 9, comprennent, à titre d'exemple, plusieurs miroirs de balayage 24, comme dans les deuxième et troisième modes de réalisation décrits précédemment. Toutefois, dans ce cas, les moyens de balayage 16 comprennent des moyens 34 de masquage de chaque miroir de balayage 24 activables automatiquement lorsque que le miroir de balayage 24 est à l'arrêt.

Les moyens de masquage 34 comprennent, par exemple, comme cela est représenté sur les figures 8 et 9, des nappes 36 ou franges souples, éventuellement lestées, absorbant les rayonnements lumineux, par exemple de couleur noire. Ainsi, dans l'exemple décrit, chaque disque 18 comporte une nappe souple annulaire 36 munie d'un bord supérieur, lié à un bord supérieur du disque 18, et d'un bord inférieur libre. Lorsque le disque 18 est à l'arrêt, la nappe 36 est rabattue sous l'effet de la gravité de façon à masquer le miroir de balayage 24 porté par ce disque 18 (voir figure 8). Lorsque le disque 18 est en mouvement, la force centrifuge subie par la nappe 36, notamment son bord libre, a tendance à relever cette dernière pour dégager le miroir de balayage 24 porté par ce disque 18 et permettre la réflexion du rayonnement laser L sur ce miroir 24 (voir figure 9).

En variante, la nappe 36 pourrait être remplacée par des éléments rigides articulés susceptibles d'adopter une configuration de masquage du miroir de balayage 24 lorsque le disque 18 qui les porte est à l'arrêt, sous l'effet de la gravité, et une configuration de dégagement du miroir de balayage 24 porté par le disque 18, sous l'effet de la force centrifuge générée par la rotation du disque 18.

Les moyens de masquage 34 forment des moyens de sécurité du système d'éclairage 12 en cas d'arrêt intempestif de la rotation des miroirs de balayage 24 alors qu'ils continuent d'être éclairés par au moins une source lumineuse 14. En effet, les moyens 34, masquant automatiquement les miroirs de balayage 24 lorsque ces derniers sont à l'arrêt, empêchent toute réflexion sur ces miroirs 24 du rayonnement lumineux L et ainsi toute concentration intempestive d'un rayonnement laser vers le système optique d'imagerie 28.

Bien entendu, les moyens de masquage 34 peuvent être utilisés dans le cas d'un système d'éclairage ne comportant qu'un seul miroir de balayage 24 comme dans le cas représenté sur les figures 1 et 2.

En variante, pour assurer la sécurité du système d'éclairage 12 en cas d'arrêt intempestif de la rotation des miroirs de balayage 24, sans utiliser les moyens de masquage 34, le système d'éclairage 12 peut comprendre des moyens d'arrêt de chaque source lumineuse 14 activables automatiquement, lorsque le miroir de balayage 24 associé à la source lumineuse 14 est à l'arrêt, par des moyens dont l'état évolue en fonction de l'état arrêté ou en mouvement de rotation du miroir de balayage 24.

De tels moyens d'arrêt peuvent être formés par des moyens à relais Reed ou à billes de contact électrique mobiles sous l'effet des forces de gravité et centrifuge.

Les moyens de balayage 16 selon le cinquième mode de réalisation, représentés sur la figure 10, comprennent plus d'une source lumineuse primaire 14, par exemple trois sources lumineuses 14 comme cela est représenté sur la figure 10, émettant chacune un rayonnement lumineux L vers un miroir de balayage 24 commun à l'ensemble des sources lumineuses 14.

Dans ce cas, les rayonnements laser L sont orientés pour former un même faisceau d'éclairage global ou plusieurs faisceaux d'éclairage proches les uns des autres.

Comme pour les moyens de balayage 16 selon le deuxième mode de réalisation, chaque source lumineuse 14 peut être formée par une diode laser de puissance relativement modérée, par exemple de 1 à 3 watts, la superposition des différents faisceaux aboutissant à un faisceau d'éclairage global équivalent à un faisceau d'éclairage formé par une diode laser de puissance relativement élevée, par exemple de 10 watts.

L'invention n'est pas limitée aux modes de réalisation représentés.

En particulier, le cas échéant, les moyens de balayage 16 peuvent comporter un miroir de balayage 24 uniquement partiellement annulaire.

Par ailleurs, on notera que l'invention peut s'appliquer un système d'éclairage ne comportant pas de dispositif de conversion de longueur d'onde, notamment si l'on utilise une source lumineuse primaire formée par une diode laser de faible puissance dont la longueur d'onde n'a pas besoin d'être convertie. Dans ce cas, le système optique d'imagerie n'est pas nécessaire, le balayage se faisant dans l'espace ou sur une surface de balayage formée par une glace de sortie de lumière du système 12. En outre, on pourrait former une source lumineuse primaire en multiplexant trois lasers colorés, placés en amont du miroir 24, pour obtenir un faisceau de lumière blanche qui serait balayé dans l'espace par ce miroir 24.

## Revendications

1. Système d'éclairage et/ou de signalisation (12) pour véhicule automobile comportant
- au moins une source lumineuse primaire (14) émettant un rayonnement lumineux (L), et
- des moyens de balayage (16) recevant le rayonnement lumineux (L) de la source lumineuse primaire (14) et le répartissant spatialement,
**caractérisé en ce que** les moyens de balayage (16) comprennent au moins un miroir de balayage (24) de forme générale au moins partiellement annulaire s'étendant autour d'un axe formant axe de rotation (X) du miroir (24), le miroir de balayage (24) présentant un profil évoluant circonférentiellement, de façon que le mouvement relatif du miroir (24) en rotation par rapport au rayonnement lumineux (L) émis par la source lumineuse (14) produit un balayage par le rayonnement lumineux réfléchi par le miroir (24),
**et en ce que** le miroir de balayage (24) est ménagé sur la tranche d'un disque (18) ou la surface d'un cylindre rotatif autour de l'axe (X) de rotation du miroir de balayage (24).

2. Système selon la revendication 1, dans lequel le miroir de balayage (24) est formé par une surface réglée engendrée par des génératrices (G1, G2, G3) coplanaires à l'axe (X) de rotation du miroir.

3. Système selon l'une quelconque des revendications 1 ou 2, dans lequel le profil du miroir de balayage (24) évolue circonférentiellement de façon à présenter des motifs successifs (O1, 02, 03, OH) permettant de former des lignes successives (L1, L2, L3, LH) de balayage de longueurs évolutives.

4. Système selon l'une quelconque des revendications précédentes, dans lequel le profil du miroir de balayage (24) évolue circonférentiellement de façon à présenter au moins un motif (OH) permettant de former une ligne de balayage (LH) de la surface de balayage de concentration évolutive.

5. Système selon l'une quelconque des revendications précédentes, dans lequel le miroir de balayage (24) comprend une zone, dite zone accessoire (H), ne participant pas au balayage mais recevant partiellement le rayonnement lumineux (L) émis par la source lumineuse primaire (14) ou par une source lumineuse dédiée de faible puissance, la zone accessoire (H) comportant des motifs (30), notamment un motif particulier (30P) servant de référence, formant une graduation pour la mesure d'un paramètre du miroir (24) lié au temps, par exemple la position angulaire du miroir (24) ou la vitesse de rotation de ce miroir (24).

6. Système selon l'une quelconque des revendications 1 à 5, comprenant plus d'une source lumineuse primaire (14) émettant chacune un rayonnement lumineux (L) et autant de miroirs de balayage (24), les miroirs de balayage (24) comprenant un axe de rotation (X) commun, chaque source lumineuse primaire (14) émettant un rayonnement lumineux (L) vers un miroir de balayage (24) associé.

7. Système selon l'une quelconque des revendications 1 à 5, comprenant
- une seule source lumineuse primaire (14) émettant un rayonnement lumineux (L),
- plus d'un miroir de balayage (24), et
- des moyens (32) de positionnement sélectif du rayonnement lumineux (L) émis par la source lumineuse primaire (14) de façon à émettre ce rayonnement lumineux (L) provenant de la source lumineuse (14) vers un miroir de balayage (24) sélectionné.

8. Système selon l'une quelconque des revendications 1 à 5, comprenant plus d'une source lumineuse primaire (14) émettant chacune un rayonnement lumineux (L) vers un miroir de balayage (24) commun à l'ensemble des sources lumineuses primaires (14).

9. Système selon l'une quelconque des revendications précédentes, comprenant des moyens (34) de masquage de chaque miroir de balayage (24) activables automatiquement lorsque le miroir de balayage (24) est à l'arrêt.

10. Système selon l'une quelconque des revendications précédentes, comprenant des moyens d'arrêt de chaque source lumineuse primaire (14) activables automatiquement, lorsque le miroir de balayage (24) associé à la source lumineuse primaire (14) est à l'arrêt, par des moyens dont l'état évolue en fonction de l'état arrêté ou en mouvement de rotation du miroir de balayage (24).

11. Système selon l'une quelconque des revendications précédentes, dans lequel les moyens de balayage (16) recevant le rayonnement lumineux (L) de la source lumineuse primaire (14) le répartissent spatialement sur une surface de balayage (17), le mouvement relatif du miroir (24) en rotation par rapport au rayonnement lumineux (L) émis par la source lumineuse (14) produisant le balayage, par le rayonnement lumineux réfléchi par le miroir (24), de la surface de balayage (17).

12. Système selon la revendication 11, comprenant un dispositif (26) de conversion de longueur d'onde portant la surface de balayage (17), les moyens de balayage (16) répartissant spatialement le rayonnement lumineux (L) qu'ils reçoivent sur le dispositif de conversion (26), de façon à balayer sur ce dispositif de conversion (26) la surface de balayage (17).

13. Système selon la revendication 12, dans lequel le rayonnement lumineux (L) émis par la source lumineuse primaire (14) est accordé par rapport au dispositif (26) de conversion de longueur d'onde de façon à réémettre un rayonnement de lumière blanche (B).

14. Système selon la revendication 13, comprenant un système optique d'imagerie (28) recevant la lumière blanche (B) réémise par le dispositif (26) de conversion de longueur d'onde et projetant cette lumière blanche (B) en avant du véhicule pour former un faisceau d'éclairage, le dispositif (26) de conversion de longueur d'onde étant situé au voisinage d'un plan focal du système optique d'imagerie (28).
